# EUROPÄISCHE PATENTSCHRIFT

(11) **EP 0 791 528 B1**
(45) Veröffentlichungstag und Bekanntmachung des Hinweises auf die Patenterteilung: **02.05.2001**
(21) Anmeldenummer: 97102491.4
(22) Anmeldetag: 15.02.1997
(51) Int. Cl.: B62D 33/04, A62C 27/00, B60J 5/08

(54) **Kastenaufbau für ein Nutzfahrzeug , insbesondere ein Einsatzfahrzeug , wie ein Feuerwehrfahrzeug**
Body structure for a commercial vehicle, in particular a rescue vehicle such as a fire-fighting vehicle
Structure de caisse pour un véhicule utilitaire notamment un véhicule d'intervention comme un fourgon de pompiers

(30) Priorität: 22.02.1996 DE 19606536
(43) Veröffentlichungstag der Anmeldung: 27.08.1997
(73) Patentinhaber: Albert Ziegler GmbH & Co.KG, 89537 Giengen/Brenz (DE)
(72) Erfinder: Bubeck, Manfred Dr., 73066 Uhingen (DE)
(74) Vertreter: Vetter, Hans, Dipl.-Phys. Dr.

(56) Entgegenhaltungen:
- WO-A-85/05337
- DE-A- 4 301 283
- DE-A- 4 306 877
- GB-A- 2 158 783
- US-A- 2 978 153
- US-A- 4 126 349
- US-A- 5 421 645

## Beschreibung

Die Erfindung betrifft einen Kastenaufbau für ein Nutzfahrzeug, insbesondere ein Einsatzfahrzeug, wie ein Feuerwehrfahrzeug, bei dem mindestens von einer der beiden Fahrzeuglängsseiten her eine Zugriffsmöglichkeit zum Innenraum des Kastenaufbaus über Öffnungen gegeben ist.

Insbesondere bei Feuerwehrfahrzeugen, jedoch auch bei anderen Einsatzfahrzeugen, sind die beim Einsatz erforderlichen Gerätschaften, Werkzeuge, Aggregate und dergleichen so im Innenraum des Kastenaufbaus untergebracht, daß ein schneller Zugriff von den Längsseiten und manchmal auch von der Rückseite her möglich ist, indem an den betreffenden Stellen Rolläden, Schwenktüren, Klappen, Schubladen oder dergleichen angeordnet sind, die nach dem Öffnen ein Beladen, Entladen, Herausschwenken und dergleichen solcher Gegenstände gestatten.
In bekannter Weise werden derartige Kastenaufbauten in Einzelanfertigung oder Kleinserie dadurch hergestellt, daß Stahlprofilrohre individuell miteinander verschweißt werden.
Auch die Innenkonstruktion erfolgt durch entsprechendes Verschweißen von Stahlprofilrohren oder sonstigen Trägern und Streben. Dabei erfolgt der Aufbau von den Längsträgern des Fahrgestells aus, d. h. die ersten Stahlprofilrohre werden mit diesen Längsträgern verbunden und danach setzt sich der Aufbau nach oben hin durch Schweißverbindungen fort. Derartige individuelle Schweißkonstruktionen benötigen eine Vielzahl von Streben, Trägern und sonstigen Versteifungselementen zur Erzielung der gewünschten Steifigkeit und sind daher in der Herstellung arbeitsintensiv, und es ist oft schwierig, die vorgeschriebenen Toleranzen, Längsmaße und Winkel einzuhalten. Änderungen des Innenaufbaus, der Türen, der Rolläden und dergleichen ist mit großem Aufwand verbunden, da die vorhandenen Einrichtungen abgetrennt und neu angeschweißt oder auf andere Weise angebracht werden müssen. Hierdurch sind einfache und schnelle Umbauten fertiger Kastenaufbauten praktisch nicht möglich. Weiterhin ist es gewöhnlich schwierig, die Stahlrohrkonstruktion gewichtsoptimal bei ausreichender Steifigkeit auszuführen.

Weiterhin zeigt Dokument US-A-5 421 645, das als nächstliegender Stand der Technik angesehen wird, einen Kastenaufbau nach dem Oberbegriff des Anspruchs 1, wobei die Seitenteile größteils aus Elementen eines einheitlichen Strangprofils zusammengesetzt sind.

Eine Aufgabe der vorliegenden Erfindung besteht daher darin, einen Kastenaufbau der eingangs genannten Gattung zu schaffen, der schnell und individuell bei hoher Steifigkeit und Maßgenauigkeit herstellbar ist, wobei auch noch nachträgliche Änderungen und Umgestaltungen leicht möglich sind.

Diese Aufgabe wird erfindungsgemäß dadurch gelöst, daß die beiden Längsseitenbereiche des Kastenaufbaus im wesentlichen durch je ein Seitenteil nach Art eines bandartig umlaufenden Rahmens gebildet werden, wobei sich die vertikalen Rahmenebenen in der Längsrichtung des Kastenaufbaus erstrecken, und daß jedes Seitenteil aus plattenartigen Strangprofilelementen eines einheitlichen Hohlkammer-Strangprofils zusammengesetzt ist.

Beim erfindungsgemäßen Kastenaufbau erfolgt zunächst ein Aufbau der beiden Seitenteile durch Verbinden der Strangprofilelemente, die durch entsprechendes Ablängen aus dem Hohlkammer-Strangprofil gebildet werden. Diese Seitenteile bilden daher selbsttragende Elemente von hoher Festigkeit und Präzision. Diese werden dann jeweils auf das Fahrgestell aufgesetzt und daran befestigt und können dann noch durch Verbindungsteile miteinander verbunden werden. Der äußere Kastenaufbau kann daher durch Verbinden von durch Ablängen vorge-fertigten Teilen schnell und einfach hergestellt und komplett oder in Form von vorgefertigten Teilkonstruktionen am Fahrgestell befestigt werden. Durch die maßgenau herstellbaren Hohlkammer-Strangprofile kann der Kastenaufbau durch moderne CAD-Systeme simuliert und geplant werden, wobei das CAD-System dann direkt die Maße der abzulängenden Strangprofilelemente und eventuelle Bohrungen, Ausschnitte oder dergleichen vorgibt und gegebenenfalls ein NC-Programm zur Herstellung dieser Strangprofilelemente steuern kann. Hierdurch wird eine nahezu voll automatische Fertigung der Einzelteile ermöglicht, die dann lediglich noch zusammengesetzt werden müssen, insbesondere durch Montage.
Durch den Aufbau aus plattenartigen Strangprofilelementen reduziert sich die Zahl der benötigten Teile erheblich, wobei dennoch eine hoch integrierte Struktur mit großer Festigkeit erzielt wird. An die mit hohen Lasten beaufschlagbaren Seitenteile, die Lastpfade bilden, kann dann der Innenaufbau problemlos fixiert werden, wobei auch dieser dadurch eine hohe Festigkeit und Stabilität erhält.

Durch die in den Unteransprüchen aufgeführten Maßnahmen sind vorteilhafte Weiterbildungen und Verbesserungen des im Anspruch 1 angegebenen Kastenaufbaus möglich.

Besonders vorteilhaft ist das Zusammensetzen der plattenartigen Strangprofilelemente durch Montage, da dann beispielsweise diese Strangprofilelemente bereits vorlackiert sein können und eine noch größere Maßgenauigkeit erzielt wird.

Die beiden voneinander beabstandeten Seitenteile werden zweck-mäßigerweise über Verbindungsteile miteinander verbunden. Der so gebildete Kastenaufbau bzw. Koffer kann dann komplett auf das Fahrgestell aufgesetzt werden, oder aber die beiden vorge-fertigten Seitenteile werden am Fahrgestell des Nutzfahrzeugs fixiert. Es ist auch möglich, lediglich die dafür vorgesehenen Strangprofilelemente am Fahrgestell zu fixieren und dann ausgehend von diesen die Seitenteile fertig zu montieren.

Zur Montage der Seitenteile am Fahrgestell sind dessen Längsträger mit sich jeweils seitlich nach außen erstreckenden Auflageträgern für die seitlich dort anbringbaren Seitenteile versehen, so daß sich die Seitenteile bezüglich der Ebene der Auflageträger und Längsträger nach unten erstrecken können.

Die Auflageträger sind dabei in vorteilhafter Weise Bestandteile eines auf den Längsträgern montierbaren Auflagerahmens, der eine gleichmäßige Lastübertragung zwischen den Seitenteilen und den Längsträgern gewährleistet.

Besonders günstig ist dabei eine Anordnung, in der die unteren Bereiche der Seitenteile im Bereich der Hinterräder radkastenartig eingeformt sind und wenigstens dort auf den Auflageträgern aufliegen. Hierdurch können die radkastenartigen Einformungen sowohl die Radkastenfunktion erfüllen, wie auch die Fixierung der gesamten Seitenteile ermöglichen.

Zur Verbindung der Strangprofilelemente miteinander eignen sich jeweils in Längskanäle der zu verbindenden Strangprofilelemente eingreifende Steckverbinder, wobei jede Verbindungsstelle zweckmäßigerweise mehrere Steckverbinder aufweist, so daß die Verbindungen bzw. Eckverbindungen zwischen Strangprofilelementen hohe Momente übertragen können und zur Biegesteifigkeit der Seitenteile beitragen. Zur Erhöhung der Festigkeit der Verbindungen werden die insbesondere als Gesenkschmiedeteile ausgebildeten Steckverbinder mit den Strangprofilelementen verschraubt.

Um die Winkelverbindungen zwischen den Strangprofilelementen bilden zu können, sind die Steckverbinder als Winkelelemente ausgebildet, deren Winkel demjenigen entspricht, unter dem die jeweiligen Strangprofilelemente aneinander zu fixieren sind, wobei die stirnseitigen Stoßflächen der Strangprofilelemente entsprechend angeschrägt sind, so daß im montierten Zustand die Stirnseiten und damit die Längskanäle jeweils abgedeckt sind.

Um eine möglichst große Gewichtsreduzierung zu erreichen, besitzen die Strangprofilelemente an mechanisch schwach belasteten Stellen Einfräsungen, insbesondere Ausfräsungen an den nach innen gerichteten Plattenflächen, so daß nach außen hin die ebenen Flächen der Strangprofilelemente erhalten bleiben. Alternativ oder zusätzlich können dann auch an mechanisch stark belasteten Stellen parallel verlaufende Verstärkungsträger an den Strangprofilelementen fixiert werden.

Die Verbindungsteile der Seitenteile sind zweckmäßigerweise als Träger oder Streben ausgebildet, wobei die Verbindungsbereiche zwischen den entsprechenden Strangprofilelementen der beiden Seitenteile mit an den Verbindungsteilen anliegenden Abdeckplatten wenigstens teilweise abgedeckt sind, um durchgehende geschlossene Außenflächen des Kastenaufbaus zu erreichen. Diese Abdeckplatten können zusätzlich noch zur Versteifung des Kastenaufbaus beitragen.

Das Hohlkammer-Strangprofil und/oder die Verbindungsteile bestehen aus Gewichtsgründen aus einem Leichtmetall oder einer Leichtmetallverbindung.

Um einen variablen Aufbau und variable Abdeckungen der Längsseitenflächen zu erreichen, ist das Hohlkammer-Strangprofil in vorteilhafter Weise im Bereich der beiden Längsseitenrandbereiche mit Verankerungs-Längsnuten versehen, die zur Befestigung der Verbindungsteile und/oder von Querstreben innerhalb eines Seitenteils und/oder von Hilfseinrichtungen zur Anbringung von Rolläden, Schwenktüren, Abdeckungen oder dergleichen und/oder zur Verankerung des Innenaufbaus im Kastenaufbau vorgesehen sind. Hierdurch können Rolläden, Türen oder Abdeckungen auch noch nachträglich leicht verändert und umgestellt werden.

Zur Anbringung von Rolläden an den Längsseitenflächen ist in vorteilhafter Weise an wenigstens einem zur Fahrzeugaußenseite hin weisenden Längsseitenrandbereich eines Strangprofilelements und an einer dazu parallelen Querstrebe oder einem dazu parallelen Längsseitenrandbereich Rolladenführungen für Rolläden mittels der Verankerungs-Längsnuten befestigbar. Diese besitzen zweckmäßigerweise jeweils ein Halteteil mit U-förmigem Profil, dessen parallele Schenkel den jeweiligen Längsseitenrandbereich beidseitig übergreifen, und die jeweils wenigstens eine Führungsschiene tragen. Hierdurch können auch nach fertiggestellten und montierten Seitenteilen noch in variabler Weise Rolläden montiert werden.

Um die Rolladen-Wickelwelle abzudecken und um eine höhere Schubsteifigkeit zu erreichen, ist ein am Längsseitenrandbereich des die Rolladenfläche quer zu den seitlichen Rolladenführungen im Bereich der Rolladen-Wickelwelle begrenzenden Strangprofilelements befestigbares Abdeckelement für die Rolladen-Wickelwelle vorgesehen, das vorzugsweise ebenfalls als Strangprofil ausgebildet ist und das ebenfalls leicht nachträglich noch mittels der Verankerungs-Längsnuten befestigbar ist.

Zur schwenkbaren Befestigung von Schwenktüren ist ein zur Fahrzeugaußenseite hin weisender Längsseitenrandbereich von wenigstens einem der Strangprofilelemente über eine Gelenkanordnung mit einer Schwenktüre verbunden, die ebenfalls als Strangpro-filelement ausgebildet sein kann. Auch hier ist in Folge der Verankerungs-Längsnuten eine einfache Montage möglich, die auch noch nachträglich erfolgen kann. Die Längsseitenflächen lassen sich so individuell mit Rolläden, Schwenktüren, Abdeckplatten oder dergleichen versehen.

Ausführungsbeispiele der Erfindung sind in der Zeichnung dargestellt und in der nachfolgenden Beschreibung näher erläutert. Es zeigen:
- Figur 1: eine perspektivische Ansicht eines Kastenaufbaus ohne Längsseitenabdeckungen an einem schematisch dargestellten Einsatzfahrzeug,
- Figur 2: eine Querschnittsdarstellung eines für die Strangprofilelemente verwendbaren Hohlkammer-Strangprofils,
- Figur 3: eine Längsschnittdarstellung eines Steckverbinders zur Verbindung der Strangprofilelemente miteinander,
- Figur 4: eine Querschnittsdarstellung des in Figur 3 dargestellten Steckverbinders,
- Figur 5: Querschnittsdarstellungen des Kastenaufbaus in verschiedenen Ebenen,
- Figur 6: eine an einem Strangprofilelement fixierbare Rolladenführung,
- Figur 7: eine an einer Querstrebe fixierbare doppelte Rolladenführung,
- Figur 8: eine an einem Strangprofilelement fixierbare Gelenkanordnung für eine Schwenktüre,
- Figur 9: ein an einem Strangprofilelement fixierbares Abdeckelement für die Rolladen-Wickelvorrichtung,
- Figur 10: zwei rechtwinkelig aneinanderstoßende und fixierte Strangprofilelemente, von denen eines durch eine Einfräsung gewichtsreduziert ist,
- Figur 11: einen verstärkten Eckbereich zwischen zwei Strangprofilelementen und
- Figur 12: einen verstärkten Bereich zwischen einem oberen Strangprofilelement und einer vertikalen Querstrebe.

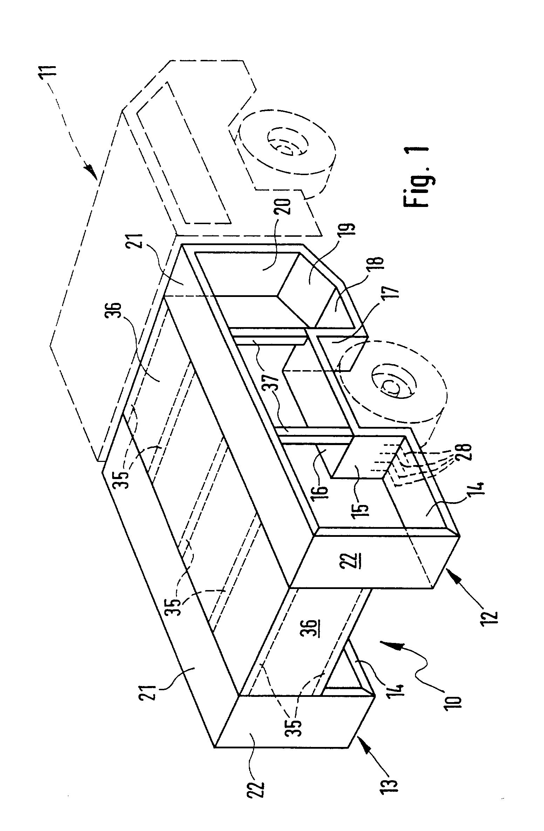

Bei dem in Figur 1 dargestellten Ausführungsbeispiel ist ein Kastenaufbau 10 eines im übrigen nur schematisch bzw. gestrichelt dargestellten Einsatzfahrzeugs 11, beispielsweise eines Feuerwehrfahrzeugs, perspektivisch dargestellt. Der Kastenaufbau 10 enthält den Laderaum des Einsatzfahrzeugs 11, wobei selbstverständlich auch andere Nutzfahrzeuge mit einem solchen Kastenaufbau 10 versehen werden können.

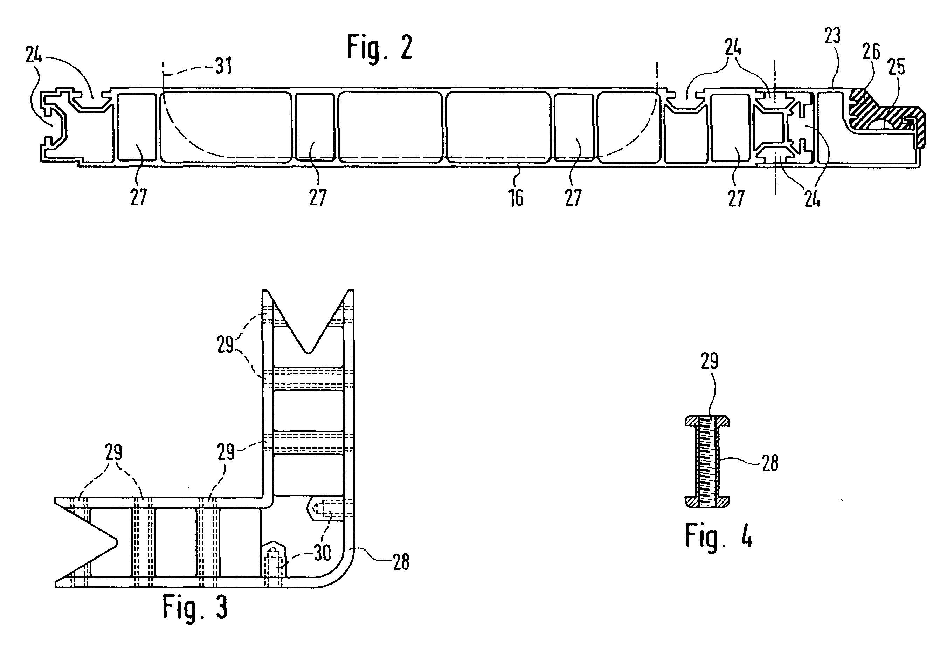

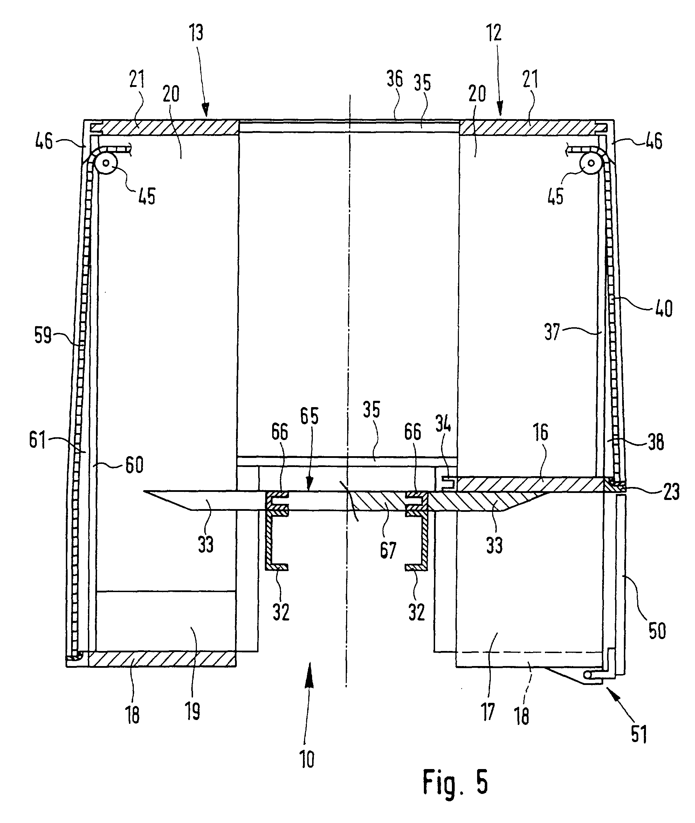

Dieser Kastenaufbau 10 besteht im wesentlichen aus zwei gleichartigen Seitenteilen 12, 13 an den beiden Längsaußenseiten des Kastenaufbaus 10. Jedes dieser Seitenteile 12, 13 ist nach Art eines bandartig umlaufenden Rahmens ausgebildet, wobei sich die vertikalen Rahmenebenen in der Längsrichtung des Kastenaufbaus 10 erstrecken. Jedes Seitenteil 12, 13 ist aus einzelnen plattenartigen Strangprofilelementen 14 - 22 zusammengesetzt, die aus einem einheitlichen Hohlkammer-Strangprofil durch entsprechendes Ablängen hergestellt werden. Dabei bilden die Strangprofilelemente 14 - 19 den unteren Bereich, die Strangprofilelemente 20 und 22 die beiden seitlichen vertikalen Bereiche und das Strangprofilelement 21 den oberen horizontalen Bereich des jeweiligen Seitenteils 12 bzw. 13. In Figur 2 ist ein Querschnitt dieses Hohlkammer-Strangprofils bzw. der Strangprofilelemente 14 - 22 dargestellt. Selbstverständlich sind auch andere Profilausbildungen denkbar. In Figur 2 ist speziell der Querschnitt des Strangprofilelements 16 dargestellt, dessen zur Fahrzeugaußenseite hin weisender Längsseitenrandbereich auch gemäß Figur 5 mit einem Anschlagelemente 23 für die untere Endkante eines Rolladenpanzers versehen ist. Dieses Anschlagelement 23 umgreift U-förmig den Längsseitenrandbereich des Strangprofilelements 16 und ist dort mit diesem verschraubt, was schematisch lediglich durch gestrichelte Linien dargestellt ist. Zur Verschraubung mit dem Anschlagelement 23 und anderen daran zu befestigenden Teilen besitzt das Hohlkammer-Strangprofil sechs Verankerungs-Längsnuten 24, wobei diese Zahl selbstverständlich auch variieren kann. Nicht dargestellte, mit einer Gewindebohrung versehene Nutmuttern können in diesen Verankerungs-Längsnuten 24 in die gewünschte Position geschoben werden, worauf dann von außen das zu befestigende Teil mittels einer Schraube an diesen Nutmuttern fixiert wird. Im Falle des Anschlagelements 23 werden zwei einander gegenüberliegende Verankerungs-Längsnuten 24 zur Befestigung verwendet. Das Anschlagelement 23 besitzt im oberen äußeren Bereich eine Einformung 25, an der ein Dichtstreifen 26 fixiert ist. Der hier nicht dargestellte heruntergelassene Rolladenpanzer liegt dann dich-tend an diesem Dichtstreifen 26 an.

In Abwandlung des in Figur 1 dargestellten Ausführungsbeispiels kann die durch die Strangprofilelemente 19 gebildete Schräge auch am Heck des Fahrzeugs angeordnet sein, um beispielsweise beim Befahren von Böschungen ein Streifen oder Aufsitzen des Kastenaufbaus 10 auf dem Untergrund zu vermeiden. In diesem Falle liegen die Strangprofilelemente 22 dann an der Fahrerkabine an, während die Strangprofilelemente 20 den Heckabschluß bilden.

Die Befestigung von Teilen mittels Nutmuttern an einem Strangprofil ist beispielsweise aus der DE 43 06 877 bekannt. Nähere Details hierzu können dieser Druckschrift entnommen werden.

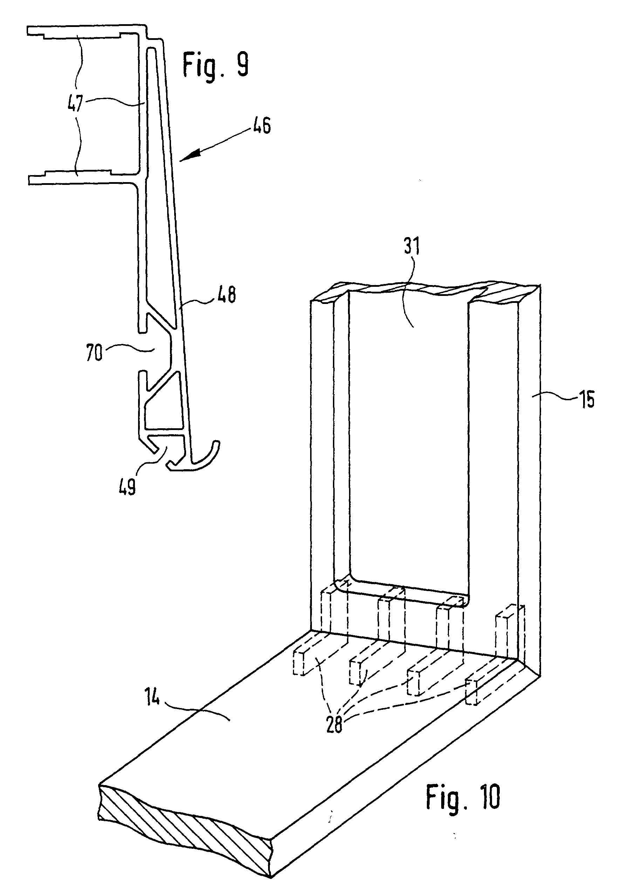

Zur Befestigung der Strangprofilelemente 14 - 22 untereinander besitzen diese jeweils im Inneren vier Längskanäle 27, die gleichzeitig zur Formsteifigkeit der Strangprofilelemente 14 - 22 beitragen. An den Verbindungsstellen werden in diese Längs-kanäle 27 Steckverbinder 28 eingesteckt, wobei Figur 3 einen solchen Steckverbinder im Längsschnitt und Figur 4 im Quer-schnitt zeigt. Durch die in Figur 4 dargestellte Querschnittsgestalt der Steckverbinder 28 ist ein Luftaustausch zwischen den Strangprofilelementen 14 - 22 jedes Seitenteils untereinander möglich, um Kondenswasserbildung zu verhindern. Der in Figur 3 dargestellte Steckverbinder 28 ist als rechtwinkliges Winkelelement dargestellt und dient zur Verbindung von zwei Strangprofilelementen 14 - 22 rechtwinkelig aneinander. Dies ist beispielsweise in Figur 10 dargestellt. An der Verbindungsstelle weisen die beiden miteinander zu verbindenden Strangprofilelemente jeweils eine 45°-Schnittkante auf, wobei die Steckverbinder 28 zunächst an das eine Element eingesteckt und mittels Schrauben fixiert werden, worauf dann das zweite Element rechtwinklig dazu auf die herausragenden Enden der Steckverbinder 28 aufgesteckt und ebenfalls durch Schraubverbindungen fixiert wird. Hierzu weisen die Steckverbinder 28 eine Vielzahl von Gewindelöchern 29, 30 auf, die zum Teil durchgehend (29) und zum Teil als Sacklöcher (30) ausgebildet sind. Zur Fixierung müssen an den aneinanderstoßenden Randbereichen der beiden aneinander zu fixierenden Strangprofilelemente entsprechende Schraubenlöcher gebildet werden. Das in Figur 10 dargestellte, vertikal nach oben weisende Strangprofilelement 15 weist im mittleren, nach innen weisenden Bereich eine Einfräsung 31 auf, die in Figur 2 durch eine gestrichelte Ausschnittslinie erläutert ist. Derartige Einfräsungen in den Strangprofilelementen 14 - 22 können überall zur Gewichtsersparnis dort vorgenommen werden, wo die Anforderungen an die Formsteifigkeit oder Festigkeit nicht so groß sind. Die Einfräsung 31 kann sich auch z. B. bis an das Strangprofilelement 14 erstrecken. In diesem Falle entfallen die beiden mittleren Steckverbinder 28.

Während die meisten Eckverbindungen zwischen Strangprofilelementen rechtwinklig sind, existieren auch solche mit anderen Winkeln, beispielsweise die Verbindungsstellen zwischen den Strangprofilelementen 18 und 19 sowie 19 und 20. An diesen Stellen müssen die aneinanderstoßenden Stirnflächen der Strangprofilelemente 17 - 20 eine entsprechend angepaßte Abschrägung aufweisen und die benötigten Steckverbinder 28 weisen ebenfalls einen entsprechenden Winkel auf. Die Zahl der Steckverbinder 28 pro Verbindungsstelle kann selbstverständlich ebenfalls variieren. An den Verbindungsstellen sind nicht dargestellte Dichtungen zur Abdichtung der Strangprofilelemente vorgesehen.

Zur Montage werden die beiden in sich formsteifen und selbsttragende Seitenteile 12, 13 auf das Fahrgestell des Einsatzfahrzeugs 11 aufgesetzt und mittels Schrauben fixiert. Dies ist in Figur 5 erläutert. Das Fahrgestell des Einsatzfahrzeugs 11 ist dort schematisch durch zwei sich in der Längsrichtung erstreckende parallele Längsträger 32 im mittleren Bereich des Einsatzfahrzeugs 11 dargestellt. Auf diesen Längsträgern 32 ist ein Tragerahmen 65 montiert, beispielsweise verschraubt, der im wesentlichen aus zwei Längsholmen 66 besteht, die auf den Längsträgern 32 in der Längsrichtung verlaufen und die durch mehrere Querholme 67 miteinander verbunden sind. Von den Längsholmen 66 aus erstrecken sich mehrere Auflageträger 33 seitlich nach außen, auf denen die Seitenteile 12, 13 aufgesetzt und angeschraubt werden. Der gesamte Tragerahmen 65 ist sehr biege- und verwindungssteif ausgebildet und dient zur möglichst gleichmäßigen Vertragung der Last des Kastenaufbaus auf die Längsträger 32. Der untere Bereich der Seitenteile 12, 13 besitzt jeweils eine radkastenartige Einformung im Bereich der Hinterräder, die durch die drei Strangprofilelemente 15 - 17 gebildet werden. Dabei erstrecken sich die beiden Strangprofilelemente 15 und 17 vertikal nach oben und sind über ihre oberen Enden durch das Strangprofilelement 16 miteinander verbunden. Dieses Strangprofilelement 16 liegt mit seinen beiden entgegengesetzten Endbereichen jeweils auf zwei Auflageträgern 33 auf, von denen in Figur 5 in Folge der Schnittdarstellung nur einer erkennbar ist. In Folge der erhöhten Belastung kann das Strangprofilelement 16 daher an seinem inneren Längsseitenrandbereich mit einer Verstärkungsschiene 34 aus Stahl versehen werden, die in nicht näher dargestellter Weise über die Verankerungs-Längs-nuten 24 am Strangprofilelement 16 fixiert ist. Auch die übri-gen Strangprofilelemente können an solchen Stellen mit Verstärkungsschienen versehen sein, an denen eine erhöhte Belastung auftritt. Selbstverständlich sind auch die Strangprofilelemente 22 und 20 mit derartigen Auflageträgern 33 verbunden, um eine möglichst gleichmäßige Lastverteilung zu erreichen. Bei Ausführungen von Kastenaufbauten ohne radkastenartige Einformung liegen die die Unterseite bildenden Strangprofilelemente des jeweiligen Seitenteils 12 bzw. 13 auf solchen Auflageträgern 33 auf.

Der in Figur 5 dargestellte linke Bereich des Kastenaufbaus 10 (links der mittleren strichpunktierten Linie) stellt einen Vertikalschnitt im Bereich und durch das Strangprofilelement 18 dar. Der rechte Bereich in Figur 5 stellt einen Schnitt im Bereich und durch das Strangprofilelement 16 dar, der durch einen der Auflageträger 33 verläuft.

Die beiden Seitenteile 12, 13 sind durch mehrere Verbindungsstreben 35 miteinander verbunden. Diese Verbindungsstreben 35 sind ebenfalls als stabförmige Strangprofile mit beispielsweise viereckigem Querschnitt ausgebildet und sind ebenfalls in nicht dargestellter Weise mit Verankerungs-Längsnuten 24 versehen, um eine Schraubmontage mit den Strangprofilelementen 14 - 22 zu ermöglichen. Hierfür benötigte Verbindungselemente und Verbindungsarten sind in der bereits angegebenen DE 43 06 877 näher beschrieben. Der Zwischenraum zwischen den jeweils sich entsprechenden benachbarten Strangprofilelementen 14 - 22 der beiden Seitenteile 12, 13 ist durch Abdeckplatten 36 ausgefüllt, die beispielsweise mit den Verbindungsstreben 35 verschraubt werden, um einheitliche, geschlossene Außenflächen des Kastenaufbaus 10 zu erreichen. Dabei kann beispielsweise die Oberseite durch eine einzige Abdeckplatte 36 oder durch mehrere solcher Abdeckplatten gebildet werden. diese Abdeckplatten könnten auch in Abwandlung des dargestellten Ausführungsbeispiels die Seitenteile 12, 13 übergreifen.

Es ist selbstverständlich auch möglich, anstelle der Vormontage der Seitenteile 12, 13 diese am Fahrgestell des Einsatzfahrzeugs 11 zu montieren, indem beispielsweise zunächst die Strangprofilelemente 16 mit den Auflageträgern 33 verschraubt werden und erst danach die übrigen Bereich der Seitenteile 12, 13 gebildet werden. Auf der anderen Seite ist es auch möglich, den kompletten Kastenaufbau 10 zunächst fertigzustellen und erst dann auf dem Fahrgestell zu befestigen.

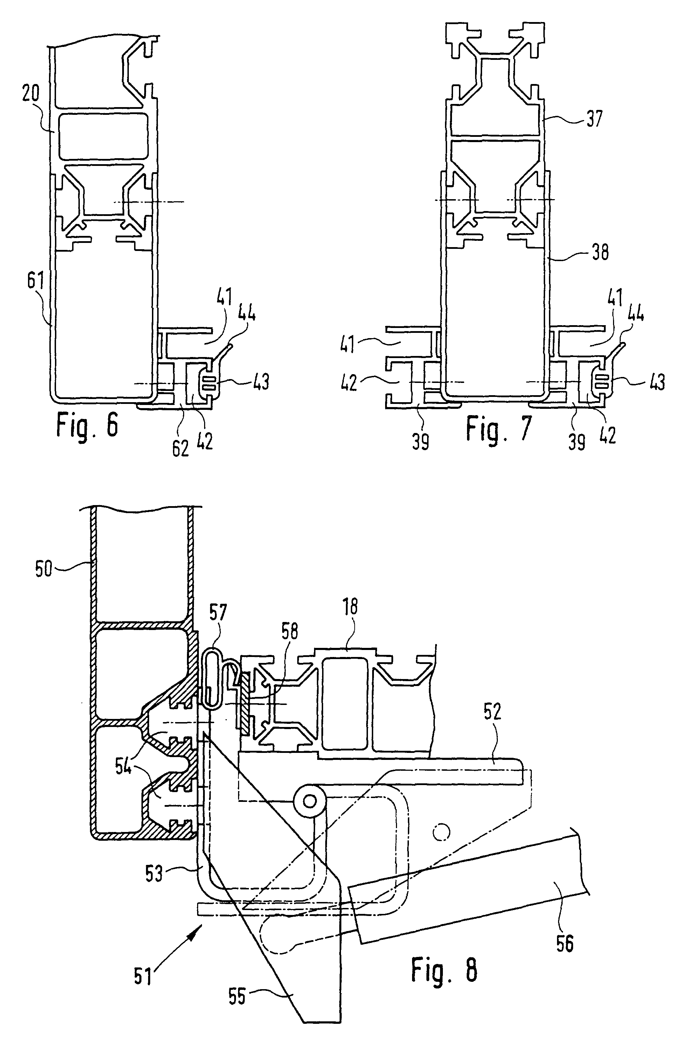

Die an den Längsaußenseiten der Seitenteile 12, 13 vorhandenen Öffnungen können in variabler Weise durch Abdeckplatten, Schwenktüren, Schubladen oder Rolläden verschlossen werden. Beispielsweise ist der nach außen offene Bereich des Seitenteils 12 oberhalb des Strangprofilelements 16 durch einen Rolladen verschlossen. Hierzu verlaufen von den äußeren Eckbereichen des Strangprofilelements 16 aus vertikale Querstreben 37 nach oben, die dort am Strangprofilelement 21 fixiert sind. Auch diese Querstreben 37 weisen hierzu entsprechende Verankerungs-Längsnuten 24 auf. Eine derartige Querstrebe 37 ist in Figur 7 im Schnitt dargestellt. Sie besitzt ein rechteckiges Querschnittsprofil und sechs Verankerungs-Längsnuten 24. Selbstverständlich können auch Querstreben mit quadratischem Profil und vier Verankerungs-Längsnuten 24 verwendet werden. Auf diese Querstreben 37 sind von außen her Halteteile 38 mit U-förmigem Profil aufgeschoben und mittels Schrauben fixiert, die sich im wesentlichen über die gesamte Länge der Querstreben 37 erstrecken. Die beiden Schenkel der Halteteile 38 umgreifen dabei die Querstreben 37 jeweils an zwei einander gegenüberliegenden Seiten. Die Schraubbefestigung ist durch eine strichpunktierte Linie dargestellt. Die Schenkel der Halteteile 38 werden von oben nach unten kontinuierlich länger, so daß sich die Außenkontur des Kastenaufbaus 10 von oben nach unten geringfügig allmählich verbreitert. Selbstverständlich kann die Schenkellänge auch konstant sein. An den nach außen weisenden Endbereichen der Halteteile 38 sind seitlich Führungsschienen 39 für einen Rolladenpanzer 40 fixiert, wobei gemäß Figur 7 zu beiden Seiten des Halteteils 38 jeweils ein Rolladen angeordnet ist. Falls ein solcher nur an einer Seite vorgesehen ist, kann die Führungsschiene 39 an der anderen Seite entfallen.

An den inneren Eckbereichen der Strangprofilelemente 16 können ebenfalls vertikale Querstreben angeordnet sein, die wie die Querstreben 37 oder gemäß den in der DE 43 06 877 beschriebenen Strangprofilen ausgebildet sein können. Hierdurch werden zusätzliche separate geschlossene Lastpfadringe gebildet, die die Stabilität und Steifigkeit des jeweiligen Seitenteils und damit des Kastenaufbaus erhöhen. Beispielsweise bilden die Strangprofilelemente 15, 14, 22 und ein Teil des Strangprofilelements 21 zusammen mit diesen Querstreben einen ersten separaten geschlossenen Lastpfadring, während die Strangprofilelemente 17, 18, 19, 20 und ein Teil des Strangprofilelements 21 zusammen mit den entsprechenden Querstreben einen zweiten solchen Lastpfadring bilden.

Jede Führungsschiene 39 weist eine Führungsnut 41 für den Rolladenpanzer 40 und eine Dichtungsnut 42 zur Aufnahme einer Dichtleiste 43 auf, von denen nur eine dargestellt ist. Diese besitzt eine zum Rolladenpanzer hin weisende und an diesem dichtend anliegende Dichtlippe 44. Derartige Führungsschienen 39 sind an sich bekannt und können bei Bedarf noch über Dichtstreifen dichtend an den Halteteilen 38 anliegen. Der Rolladenpanzer 40 verläuft am oberen Ende des Zwischenraums zwischen den Strangprofilelementen 16 und 21 über Umlenkrollen oder -wellen 45 ins Innere des Kastenaufbaus 10 zu einer nicht dargestellten Wickelwelle. Um diese Umlenkrollen oder - wellen 45 oder die Wickelwelle abzudecken, die ebenfalls an der Stelle der Umlenkwelle 45 angeordnet sein kann, ist ein Abdeckelement 46 mit dem oberen Strangprofilelement 21 verbunden, wobei das in Figur 9 im Querschnitt dargestellte Abdeckelement 46 ebenfalls als Strangprofil ausgebildet ist. Es besitzt einen U-förmigen im montierten Zustand das Strangpro-filelement 21 mit seinen Schenkeln umgreifenden Bereich 47 und einen sich nach unten erstreckenden Abdeckbereich 48. Die beiden Schenkel des U-förmigen Bereichs 47 umgreifen dabei den Längsseitenrandbereich des Strangprofilelements 21 entsprechend Figur 2 so, daß die Schenkel nicht über die Ebene des Strangprofilelements 21 überstehen, sondern in entsprechenden Ausnehmungen aufgenommen werden. Die Verschraubung erfolgt entsprechend der Verschraubung des Anschlagelements 23 in Figur 2. Der sich nach unten erstreckende Abdeckbereich 48 besitzt am unteren Ende eine Dichtungsnut 49 zur Aufnahme einer nicht dargestellten Dichtung zur Abdichtung des Zwischenraums zwischen diesem Abdeckbereich 48 und dem Rolladenpanzer 40.

Gemäß Figur 5 ist im unteren Bereich des Seitenteils 12 zwischen den Ebenen des Strangprofilelements 18 und des Strangprofilelements 16 eine Schwenktür 50 oberhalb des Strangprofilelements 18 angeordnet. Diese Schwenktüre 50 ist mittels einer Gelenkanordnung 51 am Längsseitenrandbereich des Strangprofilelements 18 um eine horizontale Achse nach unten schwenkbar gelagert. Oberhalb dieser Schwenktüre 50 kann sich ein nicht dargestellter Rolladen oder eine nicht dargestellte sonstige Schwenktüre oder eine andere Abdeckung vorgesehen sein. Die Schwenktüre 50 verschließt ein Seitenfach, das durch nicht dargestellte Zwischenböden im Inneren des Seitenteils 12 begrenzt ist.

Die Gelenkanordnung 51 ist in Figur 8 näher dargestellt. Sie besteht im wesentlichen aus einem an der Unterseite des Strangprofilelements 18 fixierbaren Befestigungsteil 52 an dem ein im wesentlichen U-förmiges Schwenkteil 53 mit einem kürzeren und einem längeren Schenkel gelenkig befestigt ist. Am längeren Schenkel des Schwenkteils 53 ist die Schwenktüre 50 mittels Schrauben befestigt. Diese Schwenktüre 50 ist ebenfalls als Strangprofil ausgebildet und besitzt Verankerungs-Längsnuten 54, die im wesentlichen den Verankerungs-Längsnuten 24 entsprechen, so daß die Schraubbefestigung auf die gleiche Weise erfolgt. Am Schwenkteil 53 ist ein flügelartiges Anschlagteil 55 fixiert, das beim Öffnen der Schwenktüre 50 in Anlage mit dem Befestigungsteil 52 oder der Unterseite des Strangprofilelements 18 gelangt und so die Schwenktüre 50 im geöffneten Zustand in einer im wesentlichen horizontalen Position hält, um beispielsweise eine Standfläche zu bilden. Dieses Anschlagteil 55 ist noch mit einem pneumatischen oder hydraulischen Antriebs- und/oder Dämpfungselement 56 verbunden, und die Öffnungs- und Schließbewegungen der Schwenktüre 50 pneumatisch oder hyraulisch zu steuern und/oder um diese zu dämpfen. Das Schwenkteil 53 und das Anschlagteil 55 sind im geöffneten Zustand der Schwenktüre 50 strichpunktiert dargestellt.

Ein Dichtungsstreifen 57, der ein Hohlprofil besitzt, ist an eine Halteleiste 58 angeklemmt, die in einer stirnseitigen Vertiefung des Strangprofilelements 18 von entsprechendem Querschnitt mittels einer schematisch dargestellten Schraubbefestigung fixiert ist. Im geschlossenen Zustand liegt die Schwenktüre 50 dichtend an diesem Dichtungsstreifen 57 an.

Es ist selbstverständlich auch möglich, die Gelenkanordnung 51 für nach oben oder nach der Seite schwenkbare Schwenktüren 50 zu verwenden.

Auf der linken Seite der Figur 5 ist an der Längsaußenseite des Seitenteils 13 ein von oben bis nach unten durchgehender Rolladen dargestellt, dessen Rolladenpanzer 59 beispielsweise zwischen dem vorderen Strangprofilelement 20 und einer dazu parallelen Querstrebe 60 geführt ist. Die Querstrebe 60 ist ähnlich Figur 7 mit einem Halteteil 38 und einer oder zwei Führungsschienen 39 versehen. Der Längsseitenrandbereich des Strangprofilelements 20 ist gemäß Figur 6 mit einem entsprechenden Halteteil 61 und einer entsprechenden Führungsschiene 39 versehen, wobei die beiden Schenkel des Halteteils 61 wieder in entspre-chende Vertiefungen des Strangprofilelements 20 eingreifen, wie dies beim Anschlagelement 23 in Figur 2 dargestellt ist, um Außenflächen in derselben Ebene zu erzielen.

In Abwandlung der Figuren 1 und 5 können die beiden Seitenteile 12, 13 anstelle durch Verbindungsstreben 35 auch durch Strangprofilelemente des gleichen Hohlkammer-Strangprofils verbunden sein, aus dem die Strangprofilelemente 14 - 22 bestehen. Auch im Innenraum des Kastenaufbaus 10 können Zwischenböden oder Wände aus solchen Strangprofilelementen bestehen oder aber die gewünschte Innenkonstruktion wird durch Querstreben 37 bzw. 60 gebildet, wobei der Aufbau derartiger Rahmenkonstruktionen und Regalsysteme in der bereits angegebenen DE 43 06 877 im Detail beschrieben ist. Das bekannte Profilstabsystem eignet sich besonders für den Innenausbau des Kastenaufbaus 10, da dort dieselben Verankerungs-Längsnuten 24 bei den Profilstäben verwendet sind. Die Verankerung des Innenaufbaus bzw. der Innenkonstruktion des Kastenaufbaus 10 an den inneren Verankerungs-Längsnuten 24 der Strangprofilelemente führt zu einer festen Verankerung und zu einer hohen Stabilität der Innenkonstruktion in Folge der Formsteifigkeit der Seitenteile 12, 13 und deren Verankerung über den Tragerahmen 65 an den Längsträgern 32 des Fahrgestells.

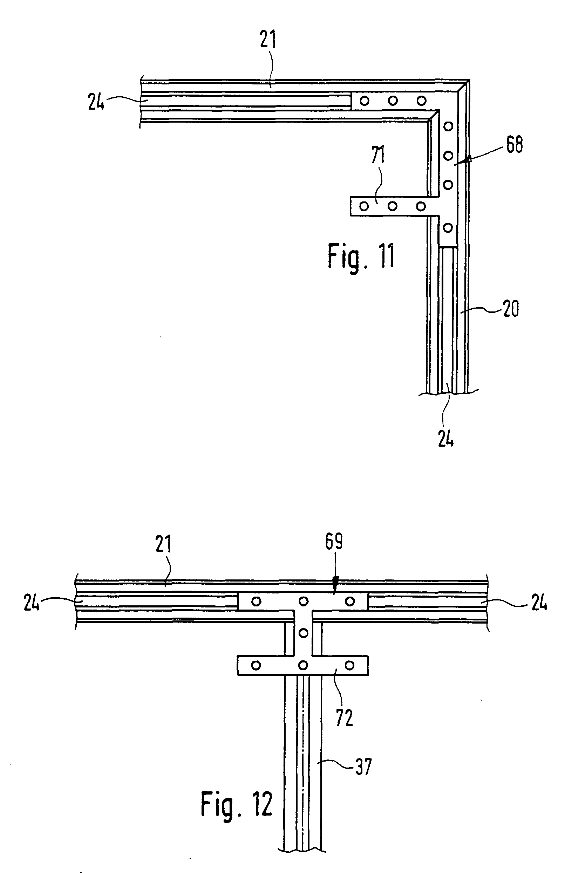

Eine noch bessere Versteifung des Kastenaufbaus 10 läßt sich durch die in den Figuren 11 und 12 dargestellten bandartigen Versteifungselemente 68, 69 erreichen. In Figur 11 ist das als Eckverbinder zwischen den Strangprofilelementen 20, 21 ausgebildete Versteifungselement 68 dargestellt. Dieses ist winkelartig ausgebildet, wobei sein Bandquerschnitt in eine entsprechende Vertiefung am jeweiligen Strangprofilelement im wesentlichen formflüssig paßt, so daß eine ebene Außenfläche entsteht. Aus diesem Grunde kann - wie bereits beschrieben - das Abdeckelement 46 am Strangprofil 21 montiert werden. Dieses Abdeckelement 46 besitzt gemäß Figur 9 eine VerankerungsLängsnut 70, durch die eine feste Schraubverbindung mit einem bandförmigen Querelement 71 des Versteifungselements 68 möglich ist, das sich vom winkelförmigen Grundelement aus parallel und seitlich versetzt zum Strangprofilelement 21 erstreckt. Hierdurch wird nicht nur eine zusätzliche Versteifung des Seitenteils 12 bzw. 13 durch das Versteifungselement 68 selbst erreicht, sondern vielmehr das Abdeckelement 46 trägt noch zur zusätzlichen Versteifung bei.

Das in Figur 12 dargestellte Versteifungselement 69 dient zur Schraubfixierung an der Verbindungsstelle zwischen dem Strangprofilelement 21 und der Querstrebe 37, d. h. generell zur Verbindung zwischen einem oberen Strangprofilelement und einer senkrecht dazu verlaufenden Querstrebe. Dieses bandförmige Versteifungselement 69 besitzt eine H-förmige Gestalt, wobei der erste Schenkel in der Vertiefung des Strangprofilelements 21 oberhalb der Verankerungslängsnut 24 fixiert wird, während der zweite Schenkel ein freies Querelement 72 bildet, das parallel und versetzt und Strangprofilelement 21 verläuft und wiederum zur zusätzlichen Verankerung des Abdeckelements 46 dient, um auch hier eine zusätzliche Versteifung durch dieses Abdeckelement zu erreichen. Die Verankerung der Versteifungselemente 68, 69 erfolgt wiederum mittels Nutmuttern in den Verankerungslängsnuten 24 gemäß der DE 43 06 877.

Die Strangprofilelemente 14 - 22, die Verbindungsstreben 35 und die Querstreben 37, 60 bestehen zur Erzielung eines möglichst geringen Gewichts aus einem Leichtmetall, wie Aluminium, oder einer Leichtmetalllegierung oder auch aus einem festen Kunststoffmaterial. Auch die Schwenktüre 50 und die an den Strangprofilelementen 14 - 22 befestigten Halteteile 38, Führungsschienen 39, Abdeckelemente 46 und dergleichen können aus einem solchen Material bestehen.

Wenn der Kastenaufbau 10 durch reine Montage hergestellt wird, können die einzelnen Teile des Kastenaufbaus bereits vor der Montage in einer Lackierstraße oder dergleichen lakkiert werden.

In einer weiteren Ausgestaltung der Erfindung kann die Heckseite des Kastenaufbaus 10 vollständig oder teilweise durch ein Abdeckblech oder eine Abdeckplatte verkleidet sein, die sich auch über die Strangprofilelemente 22 erstreckt. Die Abdeckplatte 36 zwischen den Strangprofilelementen 22 kann dann entfallen. Ein solches Abdeckblech kann dann ausgehend von den nach außen weisenden Seitenkanten der Strangprofilelemente 22 beabstandet und von der durch die Strangprofilelemente 22 gebildeten Heckseitenfläche verlaufen, so daß noch Gerätschaften, Steuereinrichtungen, Bedienungseinrichtungen oder dergleichen dazwischen angeordnet werden können. Beispielsweise kann eine Steuereinrichtung oder ein Bedienungsstand an einem der Strangprofilelemente 22 außen fixiert werden, der dann vom Abdeckblech umgriffen wird. Das Abdeckblech besitzt an der entsprechenden Stelle dann eine Öffnung, durch die ein Zugriff zu den Bedienungselementen oder eventuell auch Gerätschaften möglich ist. Diese Öffnung kann auch durch eine Klappe oder einen Rolladen verschließbar ausgebildet sein.

Weiterhin kann ein solches Abdeckblech oder eine solche Abdeckplatte, die beabstandet von den Strangprofilelementen 22 verläuft, Einformungen zur Aufnahme von Gerätschaften, wie Leitern, Spaten oder dergleichen aufweisen, wobei solche Gerätschaften dann leicht von hinten entnehmbar sind.

Weiterhin ist es auch möglich, die hinteren Strangprofilelemente 22 mit Durchgangsöffnungen zu versehen, so daß Gerätschaften, Bedienungsstände oder dergleichen hinter diesen Strangprofilelementen angeordnet werden können und durch die Durchgangsöffnung entnommen oder bedient werden können. Durchgangsöffnungen können auch dadurch gebildet werden, daß anstelle eines einstückigen plattenartigen Strangprofilelementes 22 zwei beabstandet nebeneinander angeordnete streifenartige Teilprofilelemente angeordnet werden. Diese können dann in gleicher Weise, nämlich mittels der Steckverbinder 28 fixiert werden. In dem oder hinter dem auf die beabstandete Anordnung gebildeten Spalt können dann die Gerätschaften, Bedienungsstände oder Steuereinheiten angeordnet und bedient werden. In diesen Fällen kann auch ein direkt an der Heckfläche des Kastenaufbaus 10 anliegendes Abdeckblech verwendet werden, das zum einen eine lackierfähige Oberfläche bildet und zum anderen Verschraubungen oder dergleichen abdeckt. Auch durch die zweiteilige Ausführung eines Strangprofilelementes 22 oder eines anderen Strangprofilelementes ist die Momentenübertragung gewährleistet. Gleichzeitig wird ein deutlich reduziertes Gewicht des Kastenaufbaus erreicht. Auch Durchgangsöffnungen tragen selbstverständlich zu einer solchen Gewichtsreduzierung bei.

## Patentansprüche

1. Kastenaufbau für ein Nutzfahrzeug, insbesondere ein Einsatzfahrzeug, wie ein Feuerwehrfahrzeug, bei dem mindestens von einer der beiden Fahrzeuglängsseiten her eine Zugriffsmöglichkeit zum Innenraum des Kastenaufbaus über Öffnungen gegeben ist, dadurch gekennzeichnet, daß die beiden Längsseitenbereiche des Kastenaufbaus (10) im wesentlichen durch je ein Seitenteil (12, 13) nach Art eines bandartig umlaufenden selbsttragenden Rahmens gebildet werden, wobei sich die vertikalen Rahmenebenen in der Längsrichtung des Kastenaufbaus (10) erstrecken, und daß die Lastpfade bildenden Seitenteile (12, 13) aus plattenartigen Strangprofilelementen (14 - 22) eines einheitlichen Hohlkammer-Strangprofils zusammengesetzt sind.

2. Kastenaufbau nach Anspruch 1, dadurch gekennzeichnet, daß die plattenartigen Strangprofilelemente (14 - 22) durch Montage zusammengesetzt sind, wobei an den Verbindungsstellen der Strangprofilelemente (14 - 22) vorzugsweise Abdichtungen vorgesehen sind.

3. Kastenaufbau nach Anspruch 1 oder 2, dadurch gekennzeichnet, daß die beiden voneinander beabstandeten Seitenteile (12, 13) über Verbindungsteile (35) miteinander verbunden sind.

4. Kastenaufbau nach einem der vorhergehenden Ansprüche, dadurch gekennzeichnet, daß die beiden Seitenteile (12, 13) am Fahrgestell des Nutzfahrzeugs (11) fixiert sind, und daß Längsträger (32) des Fahrgestells insbesondere mit sich jeweils seitlich nach außen erstreckenden Auflageträgern (33) für die seitlich dort anbringbaren Seitenteile (12, 13) versehen sind, wobei die Auflageträger (33) vorzugsweise Bestandteile eines auf den Längsträgern (32) montierbaren Auflagerahmens sind.

5. Kastenaufbau nach Anspruch 4, dadurch gekennzeichnet, daß die unteren Bereiche der Seitenteile (12, 13) im Bereich der Hinterräder des Nutzfahrzeugs radkastenartig eingeformt sind und wenigstens dort auf den Auflageträgern (33) aufliegen.

6. Kastenaufbau nach einem der vorhergehenden Ansprüche, dadurch gekennzeichnet, daß zur Verbindung der Strangprofilelemente (14 - 22) miteinander jeweils in Längskanäle (27) der zu verbindenden Strangprofilelemente (14 - 22) eingreifende Steckverbinder (28) vorgesehen sind, wobei jede Verbindungsstelle einen oder mehrere Steckverbinder (28) aufweist, und wobei die insbesondere als Gesenkschmiedeteile oder Gußteile ausgebildeten Steckverbinder (28) mit den Strangprofilelementen (14 - 22) im eingesteckten Zustand vorzugsweise verschraubbar sind.

7. Kastenaufbau nach Anspruch 6, dadurch gekennzeichnet, daß die Steckverbinder (28) als Winkelelemente ausgebildet sind, deren Winkel demjenigen entspricht, unter dem die jeweiligen Strangprofilelemente (14 - 22) aneinander zu fixieren sind, wobei die stirnseitigen Stoßflächen der Strangprofilelemente (14 - 22) entsprechend angeschrägt sind.

8. Kastenaufbau nach Anspruch 6 oder 7, dadurch gekennzeichnet, daß die Steckverbinder (28) den Wasser- und/oder Luftdurchlaß gestattende Einformungen, Kanäle oder Nuten aufweisen.

9. Kastenaufbau nach einem der vorhergehenden Ansprüche, dadurch gekennzeichnet, daß die Strangprofilelemente (14 - 22) an mechanisch schwach belasteten Stellen Einformungen (31), insbesondere Ausfräsungen an den nach innen gerichteten Plattenflächen besitzen und/oder daß an mechanisch stark belasteten Stellen parallel verlaufende Verstärkungsträger (34) an den Strangprofilelementen (14 - 22) fixiert sind.

10. Kastenaufbau nach einem der vorhergehenden Ansprüche, dadurch gekennzeichnet, daß die Verbindungsteile (35) als Träger oder Streben ausgebildet sind, und daß die Verbindungsbereiche zwischen den entsprechenden Strangprofilelementen (14 - 22) der beiden Seitenteile (12, 13) mit an den Verbindungsteilen (35) anliegenden Abdeckplatten (36) wenigstens teilweise abgedeckt sind.

11. Kastenaufbau nach einem der vorhergehenden Ansprüche, dadurch gekennzeichnet, daß das Hohlkammer-Strangprofil und/oder die Verbindungsteile (35) aus einem Leichtmetall oder einer Leichtmetallegierung oder einem Kunststoffmaterial bestehen.

12. Kastenaufbau nach einem der vorhergehenden Ansprüche, dadurch gekennzeichnet, daß das Hohlkammer-Strangprofil im Bereich der beiden Längsseitenrandbereiche mit Verankerungs-Längsnuten (24) zur Befestigung der Verbindungsteile (35) und/oder von Querstreben (37, 60) innerhalb der Seitenteile und/oder von Hilfseinrichtungen zur Anbringung von Rolläden, Schwenktüren, Abdeckungen oder dergleichen und/oder zur Verankerung des Innenaufbaus im Kastenaufbau versehen ist.

13. Kastenaufbau nach Anspruch 12, dadurch gekennzeichnet, daß an den Längsseitenrandbereichen der Strangprofilelemente (14 - 22) im Bereich der Eckverbindungen und/oder Verbindungsstellen mit Querstreben (37, 60) an den Verankerungs-Längsnuten (24) verankerbare Versteifungselemente (68, 69) vorgesehen sind, die vorzugsweise bandartig ausgebildet sind und wenigstens an den Verbindungsstellen mit Querstreben (37, 60) insbesondere seitliche sich über diese Querstreben (37, 60) erstreckende und dort verankerbare Fortsätze besitzen.

14. Kastenaufbau nach einem der vorhergehenden Ansprüche, dadurch gekennzeichnet, daß an wenigstens einem zur Fahrzeugaussenseite hin weisenden Längsseitenrandbereich eines Strangprofilelements (20) oder einer Querstrebe (37, 60) und an einer dazu parallelen Querstrebe (37, 60) oder einem dazu parallelen Längsseitenrandbereich eines Strangprofilelements Rolladenführungen für Rolladenpanzer (40, 59) mittels der Verankerungs-Längsnuten (24) befestigbar sind, wobei die Rolladenführungen vorzugsweise jeweils ein Halteteil (38, 61) mit U-förmigem Profil besitzen, dessen Schenkel den jeweiligen Längsseitenrandbereich beidseitig übergreifen und daß wenigstens eine Führungsschiene (39, 62) trägt.

15. Kastenaufbau nach Anspruch 14, dadurch gekennzeichnet, daß ein am Längsseitenrandbereich des die Rolladenfläche quer zu den seitlichen Rolladenführungen im Bereich der Rolladen-Wickelvorrichtung (45) begrenzenden Strangprofilelements (21) befestigbares Abdeckelement (46) für die Rolladen-Wickelvorrichtung (45) vorgesehen ist, das insbesondere als Strangprofilelement ausgebildet ist.

16. Kastenaufbau nach Anspruch 13 in Verbindung mit Anspruch 15, dadurch gekennzeichnet, daß die von Abdeckelementen (46) übergriffenen Versteifungselemente (68, 69) Fortsätze zur Verankerung an Verankerungs-Längsnuten (24) der Abdeckelemente (46) besitzen, wobei diese Verankerungs-Längsnuten (24) an von den Strangprofilelementen (21) entfernten Bereichen der Abdeckelemente (46) verlaufen.

17. Kastenaufbau nach einem der vorhergehenden Ansprüche, dadurch gekennzeichnet, daß ein von der Fahrzeuglängsseite nach außen hin weisender Längsseitenrandbereich von wenigstens einem der Strangprofilelemente (18) über eine Gelenkanordnung (51) mit einer Schwenktüre (50) verbunden ist, die insbesondere ebenfalls als Strangprofilelement ausgebildet ist.

18. Kastenaufbau nach einem der vorhergehenden Ansprüche, dadurch gekennzeichnet, daß ein Abdeckblech oder eine Abdeckplatte an der Heckseite des Kastenaufbaus (10) angeordnet ist, die vorzugsweise Einformungen zur Aufnahme von Gerätschaften und/oder abdeckbare oder nicht abdeckbare Öffnungen für den Zugriff zu dahinter angeordneten Gerätschaften oder Bedienungselementen besitzt.

19. Kastenaufbau nach einem der vorhergehenden Ansprüche, dadurch gekennzeichnet, daß wenigstens ein plattenartiges Strangprofilelement (22), insbesondere ein zur Heckseite des Kastenaufbaus (10) hinweisendes Strangprofilelement, eine Durchgangsöffnung aufweist oder aus zwei beabstandeten nebeneinander angeordneten Teilprofilelementen besteht.

## Claims

1. Body structure for a utility vehicle, in particular an emergency services vehicle such as a fire service vehicle, in which scope for access to the interior of the body structure from at least one of the two long sides of the vehicle is given via openings, characterized in that the two long side areas of the body structure (10) are each substantially formed by a side section (12, 13) in the form of an all-round band-like self-supporting frame, wherein the vertical planes of the frame extend in the longitudinal direction of the body structure (10), and that the side sections (12, 13) forming load paths are comprised of plate-like extruded profile elements (14 - 22) of a uniform hollow chamber extruded profile.

2. Body structure according to claim 1, characterized in that the plate-like extruded profile elements (14 - 22) are assembled together, preferably with the provision of seals at the connection points of the extruded profile elements (14 - 22).

3. Body structure according to claim 1 or 2, characterized in that the two side sections (12, 13), at a distance from one another, are joined together by connecting elements (35).

4. Body structure according to any of the preceding claims, characterized in that the two side sections (12, 13) are fixed to the chassis of the utility vehicle (11), and that longitudinal members (32) of the chassis, each having in particular bearing members (33) extending outwards to the side, are provided for the side sections (12, 13) which may be attached to the sides there, wherein the bearing members (33) are preferably parts of a bearing frame which can be mounted on the longitudinal members (32).

5. Body structure according to claim 4, characterized in that the lower areas of the side sections (12, 13), in the area of the rear wheels of the utility vehicle, are moulded into the form of a wheel housing, and rest upon the bearing members (33) at least at this point.

6. Body structure according to any of the preceding claims, characterized in that to join the extruded profile elements (14 - 22) together, there are provided plug-in connectors (28) each engaging in longitudinal channels (27) of the extruded profile elements (14 - 22) to be connected, wherein each connection point has one or more plug-in connectors (28), and wherein the plug-in connectors (28), in particular in the form of die-formed parts or castings, may preferably be bolted together with the extruded profile elements (14 - 22) in the inserted state.

7. Body structure according to claim 6, characterized in that the plug-in connectors (28) are in the form of angle elements, with an angle corresponding to that at which the respective extruded profile elements (14 - 22) are to be fixed together, wherein the end impact faces of the extruded profile elements (14 - 22) are suitably bevelled.

8. Body structure according to claim 6 or 7, characterized in that the plug-in connectors (28) have integral mouldings, channels or grooves allowing the passage of water and/or air.

9. Body structure according to any of the preceding claims, characterized in that the extruded profile elements (14 - 22) have integral mouldings (31) at points with weak mechanical loading, in particular milling-out on the inwards-facing plate surfaces and/or that parallel reinforcing members (34) are fixed to the extruded profile elements (14 - 22) at points with heavy mechanical loading.

10. Body structure according to any of the preceding claims, characterized in that the connecting elements (35) are in the form of bearers or struts, and that the connection areas between the relevant extruded profile elements (14 - 22) of the two side sections (12, 13) are at least partly covered by cover plates (36) in contact with the connecting elements (35).

11. Body structure according to any of the preceding claims, characterized in that the hollow chamber extruded profile and/or the connecting elements (35) are made of a lightweight metal or a light metal alloy or a plastic material.

12. Body structure according to any of the preceding claims, characterized in that, in the area of the two long side edge zones, the hollow chamber extruded profile is provided with longitudinal anchorage slots (24) for fixing the connecting elements (35) and/or cross struts (37, 60) within the side sections and/or auxiliary devices for the attachment of shutters, hinged doors, covers or the like, and/or for the anchorage of the internal structure within the body structure.

13. Body structure according to claim 12, characterized in that reinforcing elements (68, 69) which may be anchoredin-the-longitudinal anchorage slots (24) are provided at the long side edge zones of the extruded profile elements (14 - 22) in the area of the corner connections and/or connection points with cross struts (37, 60), and are preferably strip-like, with extensions at least at the connection points with cross struts (37, 60), in particular extending sidewards over these cross struts (37, 60) and capable of being anchored there.

14. Body structure according to any of the preceding claims, characterized in that shutter guides for roller shutters (40, 59) may be attached by means of the longitudinal anchorage slots (24) at one or more of the long side edge zones of an extruded profile element (20) or a cross strut (37, 60) facing towards the outside of the vehicle, and at a parallel cross strut (37, 60) or a parallel long side edge zone of an extruded profile element, wherein each of the shutter guides has preferably a retaining element (38, 61) with a U-shaped profile, the limbs of which overlap the respective long side edge zone on either side, and supporting one or more guide rails (39, 62).

15. Body structure according to claim 14, characterized in that there is provided a covering element (46) for the shutter winding unit (45), attachable to the long side edge zone of the extruded profile element (21) bounding the shutter surface at right-angles to the side shutter guides in the area of the shutter winding unit (45), and in particular in the form of an extruded profile element.

16. Body structure according to claim 13 in conjunction with claim 15, characterized in that the reinforcing elements (68, 69) overlapped by covering elements (46) have extensions for anchoring to longitudinal anchorage slots (24) of the covering elements (46), wherein these longitudinal anchorage slots (24) run in areas of the covering elements (46) removed from the extruded profile elements (21).

17. Body structure according to any of the preceding claims, characterized in that a long side edge zone of one or more of the extruded profile elements (18) facing outwards from the long side of the vehicle is connected via a hinge assembly (51) to a swing door (50), which is in particular also in the form of an extruded profile element.

18. Body structure according to any of the preceding claims, characterized in that a cover plate or cover panel is positioned on the rear of the body structure (10), and preferably has integral mouldings to hold equipment and/or openings, which may or may not have a covering facility, for access to equipment or operating elements located behind them.

19. Body structure according to any of the preceding claims, characterized in that one or more plate-shaped extruded profile elements (22), in particular an extruded profile element facing towards the rear of the body structure (10), has a through opening or is comprised of two partial profile elements positioned next to one another with clearance.

## Revendications

1. Caisse pour véhicule utilitaire, en particulier un véhicule d'intervention, comme un véhicule de pompiers, dans lequel au moins une possibilité d'accès à l'intérieur de la caisse est donnée par l'intermédiaire d'ouvertures depuis au moins l'un des deux côtés longitudinaux du véhicule, caractérisé en ce que les deux zones de côté longitudinal de la caisse (10) sont formées pour l'essentiel chacun par une partie latérale (12, 13) à la manière d'un cadre autoporteur périphérique de type bande, les plans verticaux de la caisse s'étendant dans la direction longitudinale de la caisse (10), et en ce que les parties latérales (12, 13) formant des chemins de charge sont composées d'éléments en profil extrudé (14 - 22) de type plaque d'un profilé extrudé unitaire à cavité.

2. Caisse selon la revendication 1, caractérisée en ce que les éléments en profil extrudé (14 - 22) sont composés par montage, des joints étant prévus de préférence au niveau des zones d'assemblage des éléments en profil extrudé (14-22).

3. Caisse selon la revendication 1 ou 2, caractérisée en ce que les deux parties latérales (12, 13) espacées l'une de l'autre sont reliées par des pièces de liaison (35).

4. Caisse selon l'une des revendications précédentes, caractérisée en ce que les deux parties latérales (12, 13) sont fixées sur le châssis du véhicule utilitaire (11), et en ce que des longerons (32) du châssis sont munis en particulier de supports d'appui (33) s'étendant respectivement de manière latérale vers l'extérieur pour les parties latérales (12, 13) devant y être rapportées latéralement, les supports d'appui (33) étant de préférence des éléments d'un cadre d'appui se montant sur les longerons (32).

5. Caisse selon la revendication 4, caractérisée en ce que les zones inférieures des parties latérales (12, 13) sont renfoncées à la façon de passages de roues au niveau des roues arrière du véhicule utilitaire et s'appuient au moins dans cette zone sur les supports d'appui (33).

6. Caisse selon l'une des revendications précédentes, caractérisée en ce que, pour l'assemblage mutuel des éléments en profil extrudé (12 - 22), il est prévu à chaque fois des connecteurs encliquetés (28) s'enfonçant à chaque fois dans des canaux longitudinaux (27) des éléments en profil extrudé (14 - 221) à assembler, chaque zone d'assemblage présentant un ou plusieurs connecteurs encliquetés (28), et les connecteurs encliquetés (28) conformés en particulier en pièces matricées ou de fonderie pouvant se visser aux éléments en profil extrudé (12 - 22) à l'état enfoncé.

7. Caisse selon la revendication 6, caractérisée en ce que les connecteurs encliquetés (28) sont conformés en éléments d'angle, dont l'angle correspond à celui selon lequel les éléments en profil extrudé (14 - 22) respectifs doivent être fixés les uns aux autres, les surfaces frontales de jonction des éléments en profil extrudé (14 -22) étant biseautées de manière correspondante.

8. Caisse selon la revendication 6 ou 7, caractérisée en ce que les connecteurs encliquetés (28) présentent des renfoncements, des canaux ou des rainures permettant le passage de l'eau et/ou de l'air.

9. Caisse selon l'une des revendications précédentes, caractérisée en ce que les éléments en profil extrudé (14 - 22) possèdent dans des zones peu sollicitées mécaniquement des renfoncements (31), en particulier des fraisages sur les surfaces de plaque tournées vers l'intérieur, et/ou en ce qu'en des zones peu sollicitées mécaniquement, des éléments de renfort parallèles (34) sont fixés aux éléments en profil extrudé (14 - 22).

10. Caisse selon l'une des revendications précédentes, caractérisée en ce que les pièces de liaison (35) sont conformées en supports ou contrefiches, et en ce que les zones d'assemblage entre les éléments en profil extrudé (14-22) des deux parties latérales (12, 13) sont recouvertes au moins partiellement de plaques de recouvrement (36) s'appuyant sur les pièces de liaison (35).

11. Caisse selon l'une des revendications précédentes, caractérisée en ce que le profilé extrudé à cavité et/ou les pièces de liaison (35) sont composées d'un métal léger ou d'un alliage de métaux légers ou d'un matériau synthétique.

12. Caisse selon l'une des revendications précédentes, caractérisée en ce que le profil extrudé à cavité est muni au niveau des deux zones de bord latéral longitudinales de rainures longitudinales d'ancrage (24) pour la fixation des pièces de liaison (35) et/ou d'entretoises (37, 60) à l'intérieur des parties latérales et/ou de dispositifs auxiliaires pour rapporter des volets roulants, des portes pivotantes, des fermetures ou analogue et/ou pour l'ancrage de la structure intérieure dans la caisse.

13. Caisse selon l'une des revendications précédentes, caractérisée en ce que, dans les zones de bord latéral longitudinales des éléments en profil extrudé (14 - 22), il est prévu au niveau des assemblages d'angle et/ou des zones d'assemblage avec des entretoises (37, 60), des éléments de rigidité (68, 69) pouvant s'ancrer dans les rainures longitudinales d'ancrage (24), éléments qui sont conformés de préférence en bande et possèdent, au moins au niveau des zones d'assemblage avec les entretoises (37, 60), des prolongements en particulier latéraux s'étendant sur ces entretoises (37, 60) et pouvant s'y ancrer.

14. Caisse selon l'une des revendications précédentes, caractérisée en ce que, dans au moins une zone de bord latéral longitudinale tournée vers l'extérieur du véhicule d'un élément en profil extrudé (20) ou d'une entretoise (37, 60) et sur une entretoise (37, 60) parallèle à elle ou une zone de bord latéral longitudinale parallèle à elle d'un élément en profil extrudé, peuvent être fixés des guidages de volet roulant pour des volets roulants blindés (40, 59) au moyen des rainures longitudinales d'ancrage (24), les guidages de volet roulant possédant de préférence chacun une partie d'arrêt (38, 61) à profil en U, dont les branches saisissent de chaque côté la zone de bord latérale longitudinale respective et qui poste au moins un rail de guidage (39, 62).

15. Caisse selon la revendication 14, caractérisée en ce qu'un élément de couverture (46) pouvant se fixer à la zone de bord latéral longitudinale de l'élément en profil extrudé (21) délimitant la surface de volet roulant transversalement aux guidages latéraux de volet roulant au niveau du dispositif d'enroulement (45) du volet roulant est prévu pour le dispositif d'enroulement (45) du volet roulant, élément qui est conformé de préférence en élément en profil extrudé.

16. Caisse selon la revendication 13 en liaison avec la revendication 15, caractérisée en ce que les éléments de rigidité (68, 69) saisis par les éléments de couverture (46) possèdent des prolongements pour l'ancrage sur des rainures longitudinales d'ancrage (24) des éléments de couverture (46), ces rainures longitudinales d'ancrage (24) s'étendant sur des zones des éléments de couverture (46) éloignées des éléments en profil extrudé (21).

17. Caisse selon l'une des revendications précédentes, caractérisée en ce qu'une zone de bord latéral longitudinale d'au moins un élément en profil extrudé (18) tournée vers l'extérieure depuis le côté longitudinal du véhicule est reliée par l'intermédiaire d'un dispositif articulé (51) à une porte pivotante (50), qui est conformée en particulier également en élément en profil extrudé.

18. Caisse selon l'une des revendications précédentes, caractérisée en ce qu'une tôle de couverture ou une plaque de couverture est placée sur le côté arrière de la caisse (10), qui possède de préférence des renfoncements pour recevoir des appareillages et/ou des ouvertures occultables ou non occultables pour l'accès à des appareillages ou éléments de commande placés derrière.

19. Caisse selon l'une des revendications précédentes, caractérisée en ce qu'au moins un élément en profil extrudé (22) de type plaque, en particulier un élément en profil extrudé tourné vers le côté arrière de la caisse (10) présente un passage ou se compose de deux éléments profilés partiels placés avec un écartement l'un à côté de l'autre.
